# EUROPEAN PATENT APPLICATION

(11) **EP 1 450 088 A2**
(43) Date of publication of application: **25.08.2004**
(21) Application number: 04100669.3
(22) Date of filing: 19.02.2004
(51) Int. Cl.: F16K 31/60, E03C 1/04

(54) **Single-control mixer tap with improved flow adjustment**

(30) Priority: 20.02.2003 IT MI20030305
(71) Applicant: Pizzi, Ugo, 13011 Borgosesia (Vercelli) (IT)
(72) Inventor: Pizzi, Ugo, 13011 Borgosesia (Vercelli) (IT)
(74) Representative: Vatti, Paolo, Dr. Ing.

(57) **Abstract**

Single-control mixer tap for sanitary apparatuses, sinks and showers, with improved delivering water flow adjustment, of the kind including: a base body (1); a ceramic disk cartridge (4) inserted in a seat of the base body (1), between said body (1) and a covering cap (6a; 11a) controlling said cartridge(4); a control lever (6; 11) projecting from said cap (6a; 11a) to rotate said cap and said cartridge in a first plane substantially parallel to the one to apply the tap, to adjust the percentage of hot and cold water to be mixed and in a second plane substantially orthogonal to the first one, to adjust the total water flow to be delivered; and means (7, 10; 14, 15,17) to be activated together with said control lever (6; 11) to cause a limited rotation in said second plane and to reduce the maximum delivering flow from the tap, the maximum delivering flow corresponding to the one determined by said cartridge being in any case obtainable controlling only said lever (6; 11), without activating said means (7, 10; 14, 15,17), characterised in that said means (7, 10; 14, 15, 17) and members (10; 17) for their adjustment are all directly associated to said control lever (6; 11) and positioned completely outside of said cap (6a; 11a) with the lever itself.

## Description

The present invention regards a single-control mixer tap for sanitary apparatuses, sinks and showers in which it is achieved a very improved adjustment of the water flow delivered with respect to the one obtainable with similar taps of the known art.

It is well known that the mixing of a dual flow of hot water and cold water coming from two separate pipes can be performed using taps with independent adjustments, i.e. simple blocking up taps conveying water into a common delivering conduit.

Such devices request a dual manual adjustment, on the cold water adjustment handle and on the hot water adjustment handle, to obtain the desired mixing.

Moreover, it is necessary to operate on both in order to obtain an adjustment of the overall water flow.

In this case, the water flow adjustment, percentages of hot water and cold water feeding being equal, results extremely difficult as it is always necessary to operate on two independent adjustments.

Further configurations are as well known, permitting a better comfort and efficacy of the delivered water flow adjustment and of its composition: the most recent single control mixer taps, in which, through the action of a single control handle, typically in the form of a lever coming out of the tap and provided with rotation movements in two substantially reciprocally orthogonal planes, both the definition of the percentage of cold water and hot water flow and, with equal percentage of hot water and cold water delivery, the variation of the overall flow coming out of the tap can be obtained.

As known, these single control mixer taps utilise a ceramic disc assembly, which is inserted therein in a housing of their base body, between said body and a coating cap to handle said assembly, carrying the control lever.

The ceramic disc assemblies (or cartridges) for single control mixer taps are by now standardised and are usually mounted so that in said taps the control lever rotation in a plane almost parallel to that for the tap application determines the percentage variation of cold water insertion with respect to hot water, while the rotation movement in a plane substantially orthogonal in relation to the previous one determines the variation of the overall flow delivered from the tap.

Though the adjustment of the delivered water flow and of its composition is with these single control mixer taps much simpler, more effective and comfortable than with two separate taps, it is known that many situations regard them too, in which with great difficulty it is possible to adjust precisely the delivered water flow: the rotation width of the lever controlling it is in fact necessarily limited and, therefore, if the move is not performed with the proper attention, there comes the risk of causing a different opening of the water delivery device from the one desired, i.e. an excessive or too reduced water delivery. It is virtually never possible to obtain at the first attempt - that is to say with a single movement - a water jet reduced as desired with respect to the maximum one. And for evident practical reasons, the user ends up, in particular in most cases producing an excessive opening of said device, obtaining therefore a more conspicuous water flow than that desired or, anyway, necessary.

This is an undesired effect for which a proper remedy has to be found, as it is well known that the water resources employment is nowadays one of the primary elements to pay attention to in order to reduce waste.

As single control mixer taps, just for their features (difficulty in adjusting in the use the position of the device opening lever) can easily induce the user, as seen above just now, to a water flow delivery superior to the real necessities, it is aim of the invention to provide a mixer tap provided with a single control device permitting, on one hand, the water delivery with an intermediate flow contained within a previously preset limit by adjustment means on the device itself and permitting, on the other hand, with a further intervention on said means, the exclusion of said limit to allow, when necessary, the delivery of the maximum water flow defined by the cartridge inserted in the tap.

To achieve these purposes, from EP-1055781, for instance, are already known single control mixer taps for sanitary apparatuses, sinks and showers of the already above mentioned type but with an improved delivering flow adjustment, which comprise a ceramic disk cartridge being inserted between a base body and a cap having a control lever, which comprise illustrated means in a large number of alternative embodiments that can be activated together with said control lever in order to cause a limited rotation of the perpendicular plane to the one of the application of the tap and reduce the maximum delivering flow of the water, the maximum delivering flow corresponding to the one determined by said cartridge being anyhow obtainable controlling only said lever, without activating other means.

In the solution of EP-1055781, the means which can be activated together with said control lever to cause a limited rotation are all housed, at least for their major parts, in the internal tap space, between the base body - in which the cartridge is inserted - and the cap covering said cartridge and said space, outside of the cap being only the control lever and/or adjustment elements for said means.

This arrangement makes it quite complex to manufacture the tap and its maintenance results difficult; it furthermore uses a lot of components which are subject to a relatively rapid wear, thus resulting in delicate and expensive taps.

Therefore, the above illustrated problem has been tried to be solved with an improved single-control mixer tap which resulted less expensive, easier to operate and with an improved efficiency.

The result is presently achieved with the present invention, which relates to a single-control mixer tap for sanitary apparatuses, sink and showers, with improved delivering water flow adjustment, of the kind including: a base body; a ceramic disk cartridge inserted in a seat of the base body, between said body and a covering cap controlling said cartridge; a control lever projecting from said cap to rotate said cap and said cartridge in a first plane substantially parallel to the one to apply the tap, to adjust the percentage of hot and cold water to be mixed and in a second plane substantially orthogonal to the first one, to adjust the total water flow to be delivered; and means to be activated together with said control lever to cause a limited rotation in said second plane and to reduce the maximum delivering flow from the tap, the maximum delivering flow corresponding to the one determined by said cartridge being in any case obtainable controlling only said lever, without activating said means, characterised in that said means and members for their adjustment are all directly associated to said control lever and positioned completely outside of said cap with said lever.

Suitably, in an adjustable way, said means are apt to limit the rotation of the control lever in that second plane to preset said maximum reduced flow on a number of desired values.

Said means are preferably formed by a small lever associated to said pivoting lever and an engagement through an adjustable screw or directly with the cap body.

In a first presently preferred embodiment, said lever projects downwards from a drive head of the cartridge tap and said small lever associated therewith directly bears said adjustable screw.

In a second presently preferred embodiment, said lever projecting upwards from the covering cap and the driving cap of the cartridge cap and said small lever associated therewith is pivoted in a box body in which said lever extends and interacts in it with an oscillating dumb iron bearing said adjustable screw.

According to the invention, two presently preferred embodiments of the single-control mixer tap will be illustrated in the following detailed description, given by way of example and illustrated in the accompanying drawings, in which:

fig.1 is a schematic view, partially in section, of a first embodiment of the single control mixer tap according to the invention, in rest position (off tap);

fig. 2 is a similar view to the one in fig. 1 of the same tap, but in a first delivery position (partially on tap);

fig. 3 is a similar view to the one in fig. 1 of the same tap, but in a second delivery position (partially on tap);

fig. 4 is a similar view to the one in fig. 1 of the same tap, but in the maximum delivery permitted by the cartridge (totally on tap);

fig. 5 is a schematic view, partially in section, of a second embodiment of the single control mixer tap according to the invention, in rest position (off tap);

fig. 6 is a similar view to the one in fig. 5 of the same tap, but in the maximum programmed flow delivery position (partially on tap);

fig. 7 is a similar view to the one in fig. 5 of the same tap, but in the maximum flow delivery position allowed by the cartridge (partially on tap); and

fig. 8 illustrates the return movement in home position from the positions of fig. 6 or fig. 7.

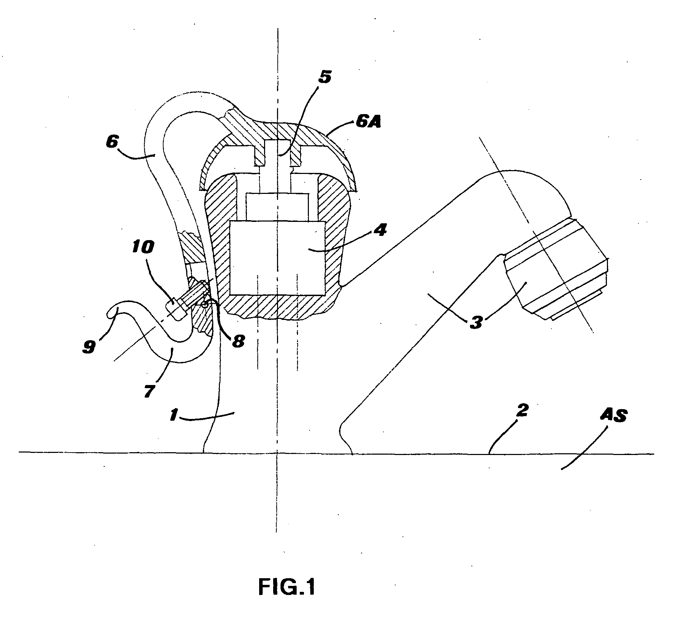

With reference to the drawings, the single-control mixer tap of fig. 1 to 4 includes, according to the typical configuration in use for these devices, a central base body 1 lying on the application plane 2 therefor (for example, the plane of a sanitary apparatus, of a sink or of the wall of a shower box), a dispenser 3 projecting from the central body 1 and a mixing assembly 4, commonly indicated as cartridge, housed in said central body 1 and within which are the ceramic disks controlling water delivery.

On the top of the cartridge 4 is, according to a still known art, a square section element 5 on which it is keyed the handling cap 6A with a shaped control lever 6 emerging therefrom, directed downwards. The cap 6A is furthermore a coating for the base body 1 and for the cartridge 4.

The rotation of control lever 6 in a plane substantially parallel to the one 2 for tap application permits the percentage variation of cold water with respect to the cold one, allowing therefore the mixing of the two flows, while the rotation of control lever 6 in a plane substantially orthogonal to the previous one determines tap opening and water delivery. More precisely, in order to open the tap, the lever 6 rotates along an arc having its centre in the ideal rotation point P within the mixing cartridge 4 and depending on the geometry of the cartridge itself. Different intensities of water flow delivered from the tap correspond to different positions of lever 6.

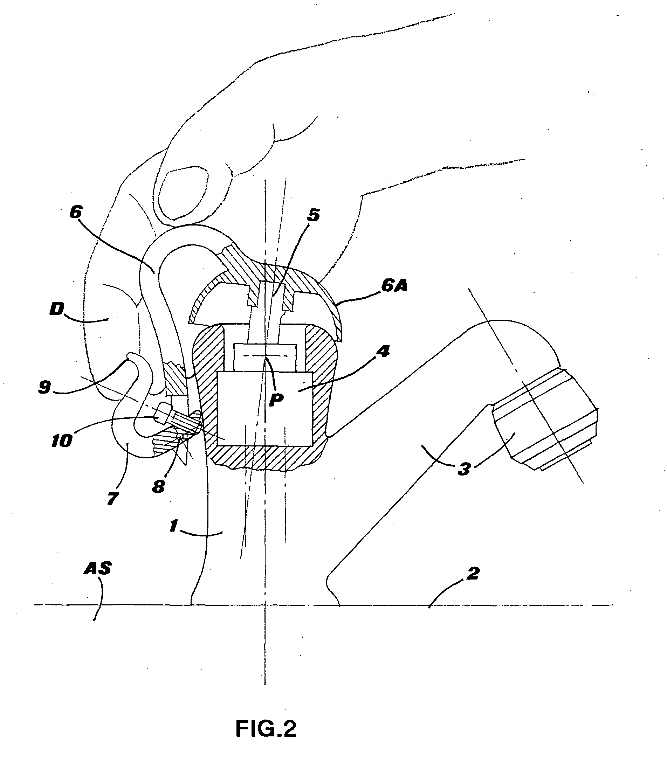

According to the invention, on the free bottom end of control lever 6 is pivoted in 8 a further small lever 7, which is U-shaped with its free end folded as an hook so as to be comfortably engaged by the finger F of a hand (fig. 2). The small lever 7 is crossed in a threaded hole of its own by a screw 10 which can be more or less projected by rotating it from the small lever 7 towards the tap body 1.

The aim of the additional small lever 7 is to permit a programmed opening of the tap by the lever 6 so to have at one's disposal the programmed maximum water flow.

Unlike the usual single control activating systems, the one of the tap according to the invention bears the necessity of handling both the two activating levers 6 and 7 to obtain the preset water flow delivery.

As it can be seen from fig. 2, the user engages with his hand both the levers 7 and 6 and presses with a finger F the small lever 7 determining its rotation around its pivoting point 8. Therefore, he causes, owing to the contact created between the screw 10 projecting from the small lever 7 and the tap body 1, a limited rotation of the lever 6, of the head 6A and of the cartridge element 5 around the pivoting point P of the cartridge itself.

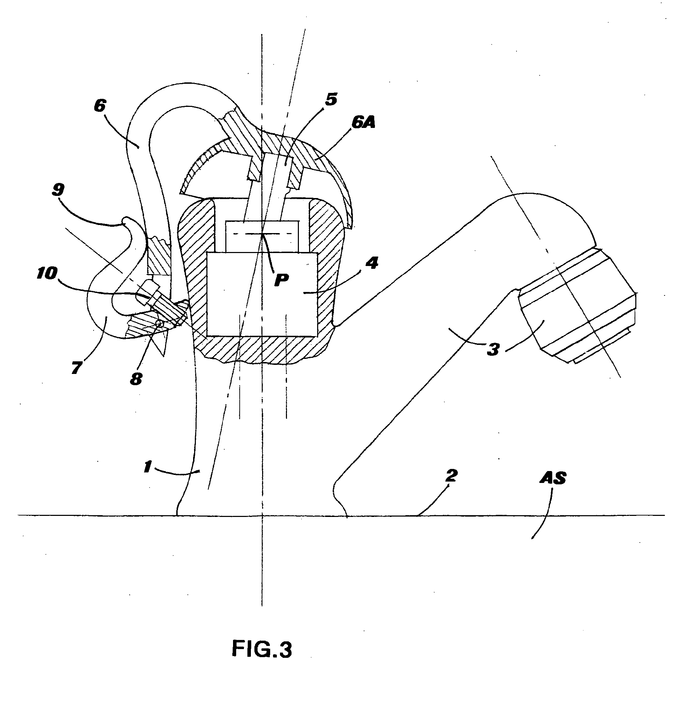

As it can be clearly seen from fig. 2 and 3, the handling has to take place pressing the lever 7 towards the lever 6 and the body 1 of the tap with which the screw 10 has to remain in contact. In this way, the screw itself operates on the body 1 of the tap and determines lever 6 rotation and, therefore, the opening of the control cartridge placed within the body 1, obtaining water delivery.

The width of lever rotation 6 and, therefore, of the element 5 of the tap cartridge is a function of screw 10 projection from small lever 7 and so it can be adjusted with great precision. Consequently, the user adjusts the maximum delivery from time to time desired for the tap.

In other words, the opening angle of the lever adjusting the delivered flow results variable between the closing position and the preset position through screw 10 positioning. Through the adjustment of screw 10 it is therefore possible to have a continuous adjustment of the maximum opening permitted, activating at the same time the levers 6 and 7. That is, the simultaneous employment of said two levers permits to deliver the previously preset maximum water flow, keeping constant the hot water/cold water mixing ratio, that it has been previously set too, with the conventional rotation of the levers 6 and 7 in the plane parallel to the one of tap application.

Fig. 3 shows a second possibility for the adjustment of this embodiment of the tap according to the invention. In addition to the position determined by the use of the body 4 of the screw 10, the lever 6 can assume a second position of maximum delivery (without an intervention on screw 10) when it is further stressed the small lever 7 which is in the position of fig. 2 up to the position of fig. 3, bringing into engagement with the body 1 directly the end of the small lever 7 itself opposite to the one hook shaped 9, on which the user operates.

It is evident the advantage in having in this way two preset maximum deliveries for each setting of screw 10.

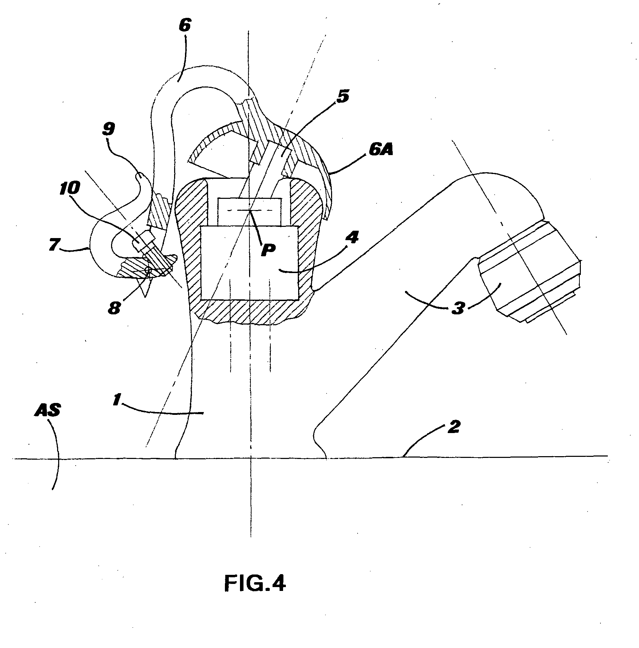

If the user desires to go from the preset maximum delivery, obtained in a wide adjustment range, as shown so far, to the maximum delivery permitted by the cartridge, with which the tap is equipped, it is sufficient to engage with the hand only the lever 6 and to lift it, after leaving the small lever 7. The tap will in fact be operated in this way conventionally until the position of maximum delivery represented in fig. 4.

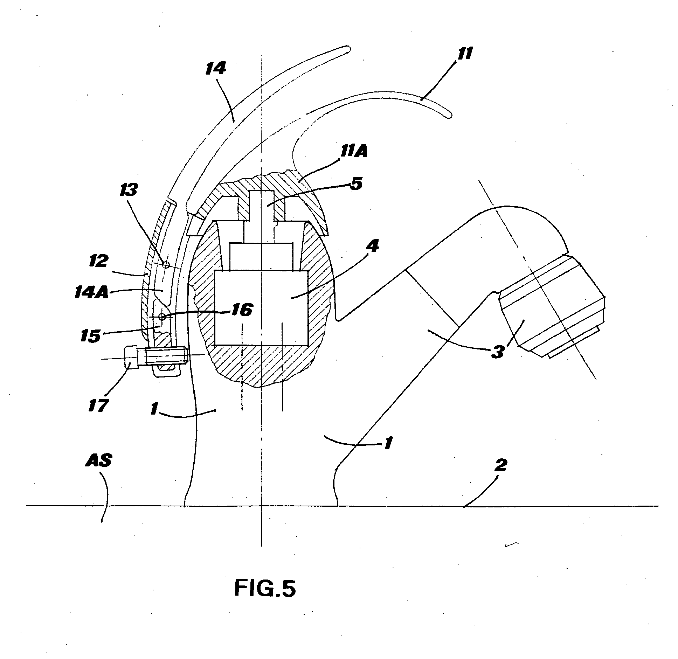

Fig. 5 to 8 show a second embodiment of the invention.

In this case too the single control mixer tap includes, according to the typical configuration in use for these devices, a base body 1 lying on the application plane 2 for it (for example, the plane of a sanitary apparatus AS, such as a sink), a dispenser 3 projecting from the central body 1 and a mixing assembly 4, usually indicated as cartridge, housed in said central body and within which are the ceramic disks controlling water delivery.

On the top of the cartridge 4 is, still in a known way, a square section element 5 on which it is keyed the handling cap with an curved control lever 11 emerging therefrom, directed upwards.

The rotation of the control lever 11 in a plane substantially parallel to the one of tap application permits the percentage variation of cold water with respect to the hot one, allowing therefore the mixing of the two flows, while the rotation of control lever 11 in a plane substantially orthogonal to the previous one determines tap opening and water delivery. More precisely, the lever 11 is rotated to open the tap along an arc having its centre in the ideal rotation point P within the mixing cartridge 4 and depending on geometry of the cartridge itself. Different intensities of the water flow delivered from the tap correspond to different positions of the lever 11.

According to the embodiment of the invention of fig. 5 to 8, a box shaped body 12 develops downwards from the manoeuvre of 11A, forming a kind of hollow extension of the lever 11, within which is pivoted in 13 a small lever 14, arranged substantially parallel to the lever 11. With the bottom end 14A of the small lever 14 is in engagement, within the body 12, a dumb iron 15 that is pivoted too to the body 12 itself in 16 and crossed in a threaded hole by an adjustment screw 17, which can be handled from the outside of the box shaped body 12 and in engagement with the body 1 of the tap.

Fig. 5 to 8 of the appended claims illustrate the employment modes of the levers 11 and 14 to obtain a programmed water delivery from the tap.

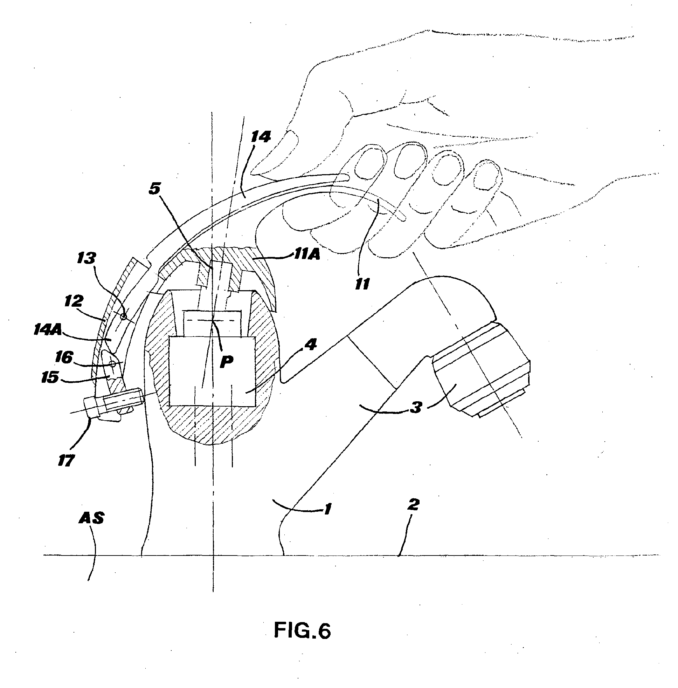

The user hand has to handle the lever 11 and to press at the same time (fig. 6) with a finger on the top end of the small lever 14.

In this way, it is created between the small lever 14 and the lever 11 a reciprocal movement producing the rotation of the dumb iron 15, in contact by means of the screw 17 with the body 1 of the tap. In this way, a rotation of the lever 11 is determined and, with it, from the body 11A and from the element 5 with respect to their rest position, so to obtain water delivery from the tap itself following the opening of the mixing cartridge placed inside the body 1 and whose control element 5 results to have a keyed lever 11.

The adjustment of the screw 5 allows the predetermination of the maximum opening and of the consequent water outlet flow from the tap.

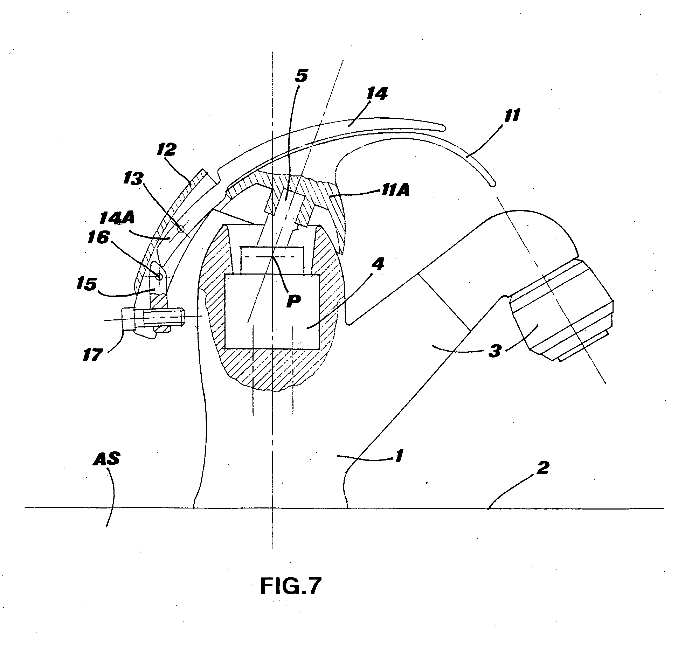

With this embodiment too, if the user desires to go from the preset maximum delivery, obtained in a wide adjustment range, as shown so far, to the maximum delivery permitted by the cartridge, with which the tap is equipped, it is sufficient to leave the small lever 14 and to engage with hand only the lever 11, depressing it until travel end. The tap will be in fact operated in this way in a conventional manner up to the maximum delivery position of fig. 7.

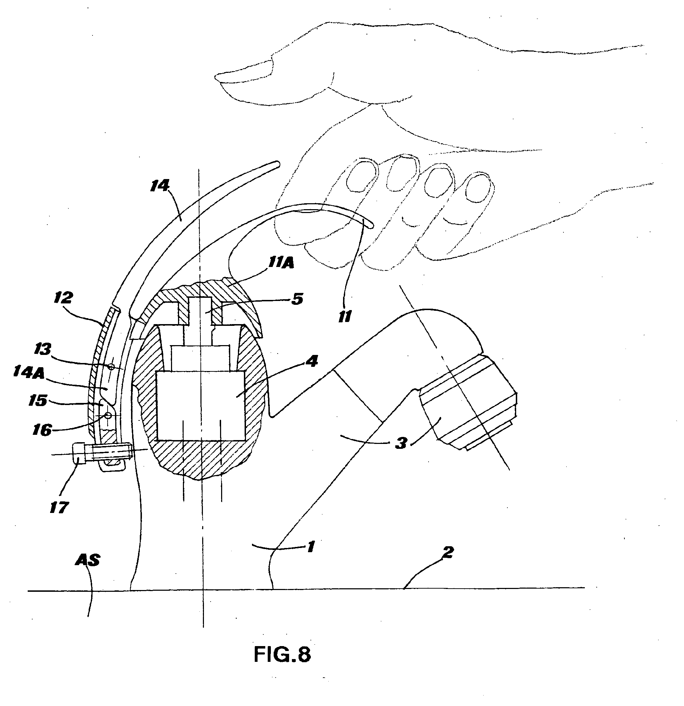

To come back to the rest position (closed tap) it is sufficient to lift with the hand the lever 11, as shown in fig. 8.

It can be clearly seen, from what has been described and illustrated, that the tap according to the invention allows with a simple, quick and comfortable handling, obtained with extremely simple and strong means, all external to the tap, to graduate the maximum water delivery from the tap itself, adapting it to every sort of use, which from time to time is necessary to the user. Thus, the tap allows an intermediate delivery position which is very easily and widely adjustable. But, furthermore, in the embodiment of fig. 1 and 4, the tap according to the invention has even two different intermediate positions (or maximum desired delivery position) - which are both adjustable and easily selectable by the user - achieving a very useful result and which was never reached up to now by the prior art. On the other hand, according to the invention, the tap always remains able to obtain the possible maximum delivery from the technical features of the cartridge of the tap itself anytime and only modifying the way to operate the tap control member. This not only allows to considerably reduce (and at most with a moderate attention) the consumption and to cancel undesirable waste, but it allows a much better handy and comfortable use of the taps, from which it will be always and easily possible to obtain the most desirable maximum flow without inconveniences and without having to pay a particular attention when controlling the tap.

It is understood that the invention could also be carried out in many other ways, different from the ones herein illustrated as a mere example.

## Claims

1. Single-control mixer tap for sanitary apparatuses, sinks and showers, with improved delivering water flow adjustment, of the kind including: a base body (1); a ceramic disk cartridge (4) inserted in a seat of the base body (1), between said body (1) and a covering cap (6a; 11a) controlling said cartridge(4); a control lever (6; 11) projecting from said cap (6a; 11a) to rotate said cap and said cartridge in a first plane substantially parallel to the one to apply the tap, to adjust the percentage of hot and cold water to be mixed and in a second plane substantially orthogonal to the first one, to adjust the total water flow to be delivered; and means (7, 10; 14, 15,17) to be activated together with said control lever (6; 11) to cause a limited rotation in said second plane and to reduce the maximum delivering flow from the tap, the maximum delivering flow corresponding to the one determined by said cartridge being in any case obtainable controlling only said lever (6; 11), without activating said means (7, 10; 14, 15,17), **characterised in that** said means (7, 10; 14, 15, 17) and members (10; 17) for their adjustment are all directly associated to said control lever (6; 11) and positioned completely outside of said cap (6a; 11a) with the lever itself.

2. Single-control mixer tap as in 1) wherein said means (7, 10; 14, 15, 17) are apt to limit the rotation of the control lever in said second plane in an adjustable way, to reset on more desired values said reduced maximum flow.

3. Single-control mixer tap as in 1) and 2) wherein said means are formed by a small lever (7, 14) associated to said control lever (6, 11) by pivoting and engagement - through an adjustable screw (10, 17) or directly - with the base body (1) of the tap.

4. Single-control mixer tap as in 3) wherein said lever (6) projects downwards from said cover and manoeuvre cap (6A) for the cap cartridge and said small lever (7) associated therewith directly bears said adjustable screw (10).

5. Single-control mixer tap as in 3) wherein said lever (11) projects upwards from said cover and manoeuvre cap (11A) of the cap cartridge and said small lever (14) associated therewith is pivoted in a box body (12) wherein said lever (11) extends and interacts with an oscillating dumb iron (15) bearing this adjustable screw (17).

6. Single-control mixer tap as in 3) and 4) wherein said lever (6) is shaped and said small lever (7) is U shaped with an edge (9) hook folded.

7. Single-control mixer tap as in 3) and 5) wherein said lever (11) and said small lever (14) are curved and are substantially parallel.
